# EUROPÄISCHE PATENTSCHRIFT

(11) **EP 1 741 737 B1**
(45) Veröffentlichungstag und Bekanntmachung des Hinweises auf die Patenterteilung: **03.08.2011**
(21) Anmeldenummer: 06012789.1
(22) Anmeldetag: 22.06.2006
(51) Int. Cl.: C08G 61/12

(54) **Verfahren zur Herstellung von Polyethylendioxythiophenen**
Process for the production of polyethylenedioxythiophenes
Procédé de production de polyéthylènedioxythiophènes

(30) Priorität: 05.07.2005 DE 102005031349
(43) Veröffentlichungstag der Anmeldung: 10.01.2007
(73) Patentinhaber: Heraeus Clevios GmbH, 63450 Hanau (DE)
(72) Erfinder: Reuter, Knud, Dr., 47800 Krefeld (DE); Kirchmeyer, Stephan, Dr., 51375 Leverkusen (DE); Jonas, Friedrich, Dr., 52066 Aachen (DE)
(74) Vertreter: Herzog, Martin

(56) Entgegenhaltungen:
- EP-A- 0 339 340
- EP-A1- 1 375 560
- EP-A2- 0 821 025
- US-A1- 2004 171 790
- GROENENDAAL L ET AL: "POLY(3,4-ETHYLENEDIOXYTHIOPHENE) AND ITS DERIVATIVES: PAST, PRESENT, AND FUTURE" 4. April 2000 (2000-04-04), ADVANCED MATERIALS, WILEY VCH, WEINHEIM, DE, PAGE(S) 481-494 , XP000949752 ISSN: 0935-9648 * Seite 490, Spalte 2, Absatz 3 *
- MENG H ET AL: "Facile Solid-State Synthesis of Highly Conducting Poly(ethylenedioxythiophene)" ANGEWANDTE CHEMIE, WILEY-VCH, WEINHEIM, DE, Bd. 42, Nr. 6, 2003, Seiten 658-661, XP002344157 ISSN: 1433-7851

## Beschreibung

Die vorliegende Erfindung betrifft die Herstellung spezieller elektrisch leitfähiger Polythiophene durch Umsetzung von 2,5-Dihalogen-3,4-ethylendioxythiophenen mit 3,4-Ethylendioxythiophenen,

Die Verbindungsklasse der π-konjugierten Polymere war in den letzten Jahrzehnten Gegenstand zahlreicher Veröffentlichungen. Sie werden auch als leitfähige Polymere oder als synthetische Metalle bezeichnet.

Leitfähige Polymere gewinnen zunehmend an wirtschaftlicher Bedeutung, da Polymere gegenüber Metallen Vorteile bezüglich der Verarbeitbarkeit, des Gewichts und der gezielten Einstellung von Eigenschaften durch chemische Modifikation haben. Beispiele für bekannte π-konjugierte Polymere sind Polypyrrole, Polythiophene, Polyaniline, Polyacetylene, Polyphenylene und Poly(p-phenylen-vinylene).

Ein besonders wichtiges und technisch genutztes Polythiophen ist das Poly-3,4-(ethylen-1,2-dioxy)thiophen, oft auch als Poly(3,4-ethylendioxythiophen) bezeichnet, das in seiner oxidierten Form eine sehr hohe Leitfähigkeit aufweist und beispielsweise in der EP-A 339 340 oder der EP-A 440 957 beschrieben ist. Eine Übersicht über zahlreiche Poly(alkylendioxythiophen)-Derivate, insbesondere Poly-(3,4-ethylendioxythiophen)-Derivate, deren Monomerbausteine, Synthesen und Anwendungen gibt L. Groenendaal, F. Jonas, D. Freitag, H. Pielartzik & J. R. Reynolds, Adv. Mater. 2000, 12, S.481- 494.

Erst kürzlich wurde die Herstellung hochleitfähiger Poly(3,4-ethylendioxythiophen)-Derivate aus 2,5-Dihalogen-3,4-ethylendioxythiophen beschrieben. Nach der von Wudl et al. beschriebenen Methode werden die 2,5-Dihalogen-3,4-ethylendioxythiophene in einer Festphasenreaktion zu den Halogen-dotierten Polythiophenen umgesetzt (H. Meng, D. F. Perepichka und F. Wudl, Angew. Chem. 2003, 115(6), S. 682 - 685 und H. Meng, D. F. Perepichka, M. Bendikov, F. Wudl, G. Z. Pan, W. Yu, W. Dong und S. Brown, J. Am. Chem. Soc. 2003, 125, S. 15151 - 15162). Dieses Verfahren führt zwar zu den gewünschten hochleitfähigen Polymeren, weist jedoch einige Nachteile auf. Einerseits fürht die Festphasensynthese zu Produkten mit schwer einstellbarer Leitfähigkeiten, die stark von den Reaktionshedingungen (Zeit, Temperatur) abhängen. Die höchste Leitfähigkeit wird nur nach längerer Reaktionszeit erreicht (Angew. Chem.). Weiterhin sind (J. Am. Chem. Soc.) die dotierten Polythiophene nicht temperaturstabil und geben bereits knapp oberhalb von Raumtemperatur hochgiftiges Halogen, z. B. Br ab. Dieses Verhallen ist nicht mit einer technischen Anwendung vereinbar. Durch eine Nachbehandlung des aus 2,5-Dibrom-3,4-ethylendioxythiophen mit konz. starken Säuren (Schwefelsäure, Trifluomethansulfonsäure) wird unter Freisetzung von Brom ein Material mit stark verminderter Leitfähigkeit erhalten (J. Am. Chem. Soc.). Weder diese Nachbehandlung noch die Abnahme der Leitfähigkeit sind im Sinne einer Anwendung akzeptabel. Als Reaktionsmechanismus wird in J. Am. Chem. Soc. eine oxidative Polymerisation der 2,5-Dihalogen-3,4-ethylendioxythiophene angegeben.

Nach einer von Baik et al. beschriebenen Methode werden die 2,5-Dihalogen-3,4-ethylendioxythiophene in Lösung mit Säuren zu leitfähigen Poly-(2,5-Dihalogen-3,4-ethyleridioxythiophen)en umgesetzt (W.-P. Baik, Y.-S. Kim, J.-H. Park und S.-G. Jung, Myongji Univ. Seoul, US Patent Appl. 2004/0171790). Das grundlegende Problem eines im leitfähigen Polymer verbleibenden sehr hohen Halogenüberschusses, z. B. als Br₃⁻-Gegenion, der mit den oben beschriebenen Nachteilen in der Stabilität und der Gefahr der Abspaltung von freiem Halogen verbunden ist, wird durch dieses Verfahren jedoch nicht überwunden.

Die nach beiden Verfahren erzielbare gute Leitfähigkeit der aus 2,5-Dihalogen-3,4-ethylendioxythiophen hergestellten Poly(3,4-ethylendioxythiophen)e und der beiden Verfahren eigene, vorteilhafte Verzicht auf zusätzliche Oxidationsmittel legen jedoch nahe, nach Alternativen zu suchen. Diese Alternativen sollen unter Verwendung der 2,5-Dihalogen-3,4-ethylendioxythiophene hochleitfähige Materialien liefern, ohne mit den o. g. Nachteilen behaftet zu sein.

Überraschend wurde gefunden, dass 3,4-Ethylendioxythiophen (im folgenden ggf. als EDT abgekürzt) ausgezeichnet mit 2,5-Dihalogen-3,4-ethylendioxythiophenen in flüssiger Phase oder Lösung copolymerisiert werden kann.

Dies ist aus verschiedenen Gründen unerwartet: Nach dem Verfahren von Baik et al. findet die Polymerisation in Gegenwart von Proton- oder Lewis-Säuren statt. Solche Säuren überführen 3,4-Ethylendioxythiophen jedoch normalerweise in einer Gleichgewichtsreaktion in nicht leitfähige Dimere und Trimere (K. Reuter, V. A. Nikanorov, V. M. Bazhenov, EP 1 375 560 A1). Weiterhin benötigen 3,4-Ethylendioxythiophene, um zu leitfähigen Polythiophenen umgesetzt zu werden, stets eines Oxidationsmittels (siehe Adv. Mater.).

Schließlich findet laut J. Am. Chem. Soc. eine Polymerisation der Dihalogen-3,4-ethylendioxythiophene in Lösung gar nicht statt. Sie soll nach Wudl et al. praktisch an das Vorliegen des festen Zustandes gebunden sein, da z. B. auch geschmolzenes 2,5-Dibrom-EDT nur noch extrem langsam polymerisiert.

Gegenstand der Erfindung ist ein Verfahren zur Herstellung von elektrisch leitfähigen Poly-3,4-ethylendioxythiophenen, dadurch gekennzeichnet ist, dass
2,5-Dihalogen-3,4-ethylendioxythiophene der Formel (I), 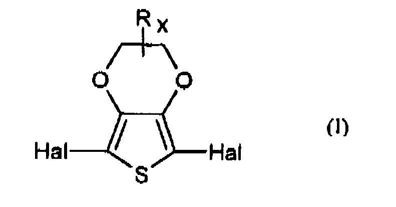 wobei Hal Cl, Br oder 1 bedeutet, R = ggf. mit OH oder O(CH₂)ₙSO₃M substituiertes C₁- bis C₁₈-Alkyl, mit n = 3 oder 4, M = H oder Na, K, und x = 0 bis 4 ist,
und 3,4-Ethylendioxythiophen der Formel (II), 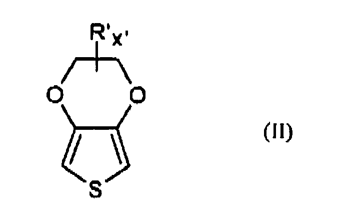 wobei R' und x' die gleiche Bedeutung wie R und x in Formel (I) haben, jedoch unabhängig voneinander gewählt werden können, in einem Lösemitlel miteinander umgesetzt werden.

Bevorzugt werden 1 bis 99 Gew.-%, besonders bevorzugt 5 bis 95 Gew.-% der Verbindung (f) mit 99 bis I Gew.-%, besonders bevorzugt 95 bis 5 Gew.-% der Verbindung (II), ganz besonders bevorzugt 10 bis 50 Gew.-% der Verbindung (I) mit 90 bis 50 Gew.-% der Verbindung (II) untgesetzt.

Hal bedeutet bevorzugt Br. Als Verbindung (I) wird bevorzugt eine am Dioxanring unsubstituierte Verbindung eingesetzt, d. h., x ist bevorzugt 0, unabhängig davon ist in Verbindung (II) x' bevorzugt ebenfalls gleich 0.

Die Umsetzung findet dabei zwingend in flüssiger Phase, d. h., in einem organischen Lösungsmittel oder in Gegenwart einer Menge einer flüssigen Verbindung (II) statt, die vor oder im Laufe der Reaktion zur Auflösung der festen Verbindung (I) fahrt.

Lösungsmittel können z. B. sein aliphatische und aromatische Kohlenwasserstoffe, wie Hexan, Heptan, Octan, Toluol, Xylol, hutogenierte aliphatiselie oder aromatische Kohlenwasserstoffe, wie Methylenchlorid, Chloroform, Chlorbenzol, o-Dichlorbenzol, Ether, wie Diethylether, Di-isopropylether, tert.Butylmethylether, Tetrahydrofuran (THF). Dioxan, Diglyme, Alkohole, wie Meethanol, Ethanol, n- und iso-Propanol, Butanole, Ethylenglykol, Diethylenglykol, Sulfoxide, wie Dimethylsulfoxid (DMSO), Amide, wie Dimethylformanid, Dimethylacetamid, N-Methylpyrrolidon. Bevorzugt werden Kohlenwasserstoffe und halogenierte Kohlenwasserstoffe, besonders bevorzugt letztere. Die Lösungsmittel können auch als Gemische verschiedener o. g. Beispiele eingesetzt werden. Unter Umständen, zum Beispiel beim Vorliegen wasserlöslicher Verbindungen I und/oder II, kann es auch sinnvoll sein, in Wasser, ggf. im Gemisch mit geeigneten wassermischbaren organischen Lösungsmitteln zu arbeiten.

Bei der Verwendung organischer Lösungsmittel kann es vorteilhaft sein, katalytische Mengen N-Bromsuccinimid zuzusetzen.Die Umsetzung kann ohne oder in Gegenwart von Säuren stattfinden. Die Reaktion wird bevorzugt säurekatalysiert durchgeführt. Geeignete Situren sind nicht oxidierende Lewis-Säuren wie Bortrifluorid (z. B. als Diethylether-Komplex), Aluminiumchlorid, Zinkchlorid, Titantetrachlorid, usw. Geeignete Säuren sind ferner Protonsäuren wie Schwefelsäure, Sulfonsäuren wie Methansulfonsäure, Trifluormethan-sulfonsäure, p-Toluolsulfonsäure, polymere Sulfonsäuren wie Polystyrolsulfonsäure oder andere starke Säuren wie z, B. Trifluoressigsäure, Phosphorsäure, Polyphosphorsäure, Salzsäure, Bromwasserstoffsäure. Es können auch verschiedene Säuren im Gemisch eingesetzt werden.

Die Umsetzung kann beispielsweise bei Temperaturen zwischen 0 und 180 °C, bevorzugt 20 und 120 °C, besonders bevorzugt zwischen 50 und 100 °C durchgeführt werden.

### Beispiele

### Beispiel 1

2,5 g EDT und 2,5 g 2,5-Dibrom-EDT wurden ohne Lösungsmittel gemischt und unter Rühren auf 60 °C erhitzt. Unter Temperaturanstieg auf 77 °C reagierte das Gemisch innerhalb von 5 min zu einer schwarzblauen Masse durch, deren spezifische Leitfähigkeit - als Pulverpressling gemessen - ca. 0,01 S/cm betrug.

### Beispiel 2

2,5 g EDT und 1,25 g 2,5-Dibrom-EDT wurden ohne Lösungsmittel gemischt und unter Rühren in zwei std auf 80 °C erhitzt. Unter Temperaturanstieg auf 87 °C reagierte das Gemisch innerhalb von 15 min zu einer schwarzblauen Masse durch, deren spezifische Leitfähigkeit - als Pulverpressling gemessen - 4,8 x 10⁻² S/cm betrug.

### Beispiel 3

4,0 g EDT und 1,0 g 2,5-Dibrom-EDT wurden ohne Lösungsmittel gemischt und unter Rühren auf 80°C erhitzt. Bei dieser Temperatur wurde eine Spur N-Brom-succinimid zugegeben. Das Gemisch reagierte daraufhin heftig und unter Temperaturanstieg auf 113 °C zu einer schwarzblauen, elektrisch leitfähigen Masse durch. Leitfähigkeit als Pulverpressling: 3 x 10⁻³ S/cm.

### Beispiel 4

2,66 g EDT, 1,4 g 2,5-Dibrom-EDT und eine Spur N-Bromsuccinimid wurden in 50 ml Chloroform unter Rühren 11 std zum Rückfluss erhitzt. Nach ca. 5 std begann die Abscheidung eines schwarzblauen Feststoffes. Nach 11 std wurde der Feststoff abfiltriert, mit Chloroform gewaschen und getrocknet, Ausbeute: 1,5 g = 37 % d. Th. Leitfähigkeit als Pulverpressling: 4,3 x 10⁻² S/cm.

### Beispiel 5

3,98 g EDT, 1,4 g 2,5-Dibrom-EDT und eine Spur N-Bromsuccinimid wurden in 50 ml Chloroform unter Rühren 14 std zum Rückfluss erhitzt. Danach wurde der gebildete schwarzblaue Feststoff abfiltriert, mit Chloroform gewaschen und bei 40 °C/20 mbar getrocknet, Ausbeute: 3,41 g = 63 % d. Th. Leitfähigkeit als Pulverpressling: 3,7 x 10⁻⁴ S/cm.

### Beispiel 6

5,31 g EDT, 1,4 g 2,5-Dibrom-EDT und eine Spur N-Bromsuccinimid wurden in 50 ml Chloroform unter Rühren 11 std zum Rückfluss erhitzt. Nach ca. 5 std begann die Abscheidung eines schwarzblauen Feststoffes. Nach 11 std wurde der Feststoff abfiltriert, mit Chloroform gewaschen und getrocknet, Ausbeute: 2,8 g = 42 % d. Th. Leitfähigkeit als Pulverpressling: 1,4 x 10⁻³ S/cm.

### Beispiel 7

Zu 2,66 g EDT und 1,4 g 2,5-Dibrom-EDT in 50 ml Chloroform wurden in 25 min 9,1 ml Borfluorid-Diethylether-Komplex unter Rühren zudosiert (exotherme Reaktion). Nach Rühren über Nacht wurde der ausgefallene Feststoff abfiltriert, mit Chloroform gewaschen und getrocknet. Leitfähigkeit als Pulverpressling: 7 x 10⁻⁷ S/cm.

### Beispiel 8

Zu 2,66 g EDT und 1,4 g 2,5-Dibrom-EDT in 50 ml Chloroform wurden in 25 min 0,2 ml 98 %ige Schwefelsäure unter Rühren zugetropft. Nach Rühren über Nacht wurde die tief dunkelblaue Sustension filtriert und der Feststoff mit Chloroform gewaschen und bei 80 °C getrocknet. Leitfähigkeit als Pulverpressling: 3 x 10⁻⁷ S/cm.

### Beispiel 9

0,474 g EDT, 0,5 g 2,5-Dibrom-EDT und 0,474 g p-Toluolsulfonsäure wurden in 85 ml n-Butanol gelöst und 10 min bei 23 °C gerührt. Danach wurde die Lösung mit einem Rakel mit 60 µm Nassfilm-Schichtdicke auf einer Glasplatte aufgezogen und bei 140 °C zu einem leitfähigen, schwarzgrauen Film getrocknet.

### Beispiel 10

0,38 g EDT, 0,4 g 2,5-Dibrom-EDT und 5,3 g 85 %ige Phosphorsäure wurden in 50 ml Ethanol gelöst. Nach 10 min Rühren wurde die Lösung mit einem Rakel mit 60 µm Nassfilm-Schichtdicke auf einer Glasplatte aufgezogen und bei 150 °C zu einem leitfähigen, graublauen Film getrocknet, Oberflächenwiderstand 10⁶ Ohm/square.

## Patentansprüche

1. Verfuhren zur Herstellung von elektrisch leirfähigen Poly-3,4-ethylendioxythiophenen, **dadurch gekennzeichnet, dass**
2,5-Dihalogen-3,4-ethylendioxythiophene der Formel (I), 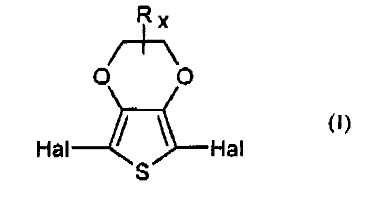 wobei Hal Cl, Br oder I bedeutet, R = ggf. mit OH oder O(CH₂)ₙSO₃M substituiertes C₁- bis C₁₈-Alkyl, mit n = 3 oder 4, M = H oder Na, K, und x = 0 bis 4 ist,
und 3,4-Ethylendioxythiophen der Formel (II), 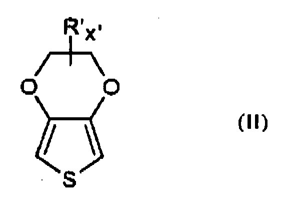 wobei R' und x' die gleiche Bedeutung wie R und x in Formel (I) haben, jedoch unabhängig voneinander gewählt werden können, in einem Lösemittel miteinander umgesetzt werden.

2. Verfahren gemäß Anspruch 1, **dadurch gekennzeichnet, dass** 1 bis 99 Gew.-%, bevorzugt 5 bis 95 Gew.-% der Verbindung (I) mit 99 bis 1 Gew.-%, bevorzugt 95 bis 5 Gew.-% der Verbindung (II) umgesetzt werden.

3. Verfahren gemäß Anspruch 1, **dadurch gekennzeichnet, dass** 10 bis 50 Gew.-% der Verbindung (I) mit 90 bis 50 Gew.-% der Verbindung (II) umgesetzt werden.

4. Verfahren gemäß einem der Ansprüche 1 bis 3, **dadurch gekennzeichnet, dass** Hal Br bedeutet.

5. Verfahren gemäß einem der Ansprüche 1 bis 4, **dadurch gekennzeichnet, dass** in Verbindung (I) x = 0 ist und unabhängig davon in Verbindung (II) x' = 0 ist.

6. Verfahren nach Anspruch 1 bis 5, **dadurch gekennzeichnet, dass** die Umsetzung in einem organischen Lösungsmittel stattfindet.

7. Verfahren nach einem der Ansprüche 1 bis 6, **dadurch gekennzeichnet, dass** die Umsetzung säurekatalysiert ist.

## Claims

1. Process for the preparation of electrically conductive poly-3,4-ethylenedioxythiophenes, **characterized in that**
2,5-dihalo-3,4-ethylenedioxythiophenes of the formula (I) 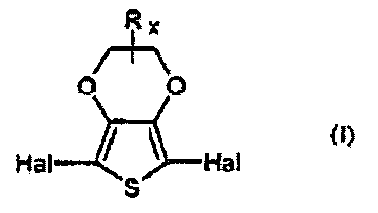 wherein Hal denotes Cl, Br or I, R = C₁- to C₁₈-alkyl optionally substituted by OH or O(CH₂)ₙSO₃M, where n = 3 or 4, M = H or Na, K, and x = 0 to 4,
and 3,4-ethylenedioxythiophene of the formula (II) 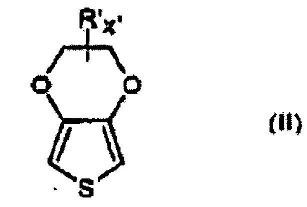 wherein R' and x' have the same meaning as R and x in formula (I), but can be chosen independently of each other, are reacted with one another in a solvent.

2. Process according to claim 1, **characterized in that** 1 to 99 wt.%, preferably 5 to 95 wt.% of the compound (I) is reacted with 99 to 1 wt.%, preferably 95 to 5 wt.% of the compound (II).

3. Process according to claim 1, **characterized in that** 10 to 50 wt.% of the compound (I) are reacted with 90 to 50 wt.% of the compound (II).

4. Process according to one of claims 1 to 3, **characterized in that** Hal denotes Br.

5. Process according to one of claims 1 to 4, **characterized in that** in compound (I) x = 0, and independently thereof in compound (II) x'= 0.

6. Process according to claim 1 to 5, **characterized in that** the reaction takes place in an organic solvent.

7. Process according to one of claims 1 to 6, **characterized in that** the reaction is acid-catalysed.

## Revendications

1. Procédé de préparation de poly-3,4-éthylènedioxythiophènes électriquement conducteurs, **caractérisé en ce que**
des 2,5-dihalogéno-3,4- éthylènedioxythiophènes de la formule (I) 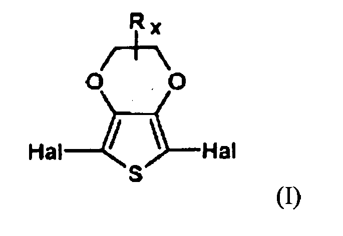 dans laquelle Hal signifie un Cl, un Br ou un I, R = un alkyle en C₁ à C₁₈ substitué le cas échéant par OH ou par O(CH₂)ₙSO₃M, avec n = 3 ou 4, M = H ou Na, K et x = 0 à 4,
et du 3,4- éthylènedioxythiophène de la formule (II) 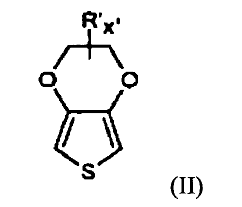 dans laquelle R' et x' ont la même signification que R et x dans la formule (I), mais peuvent être choisis indépendamment les uns des autres, sont mis en réaction ensemble dans un solvant.

2. Procédé selon la revendication 1, **caractérisé en ce que** 1 à 99 % en poids, de préférence 5 à 95 % en poids du composé (I) réagissent avec 99 à 1 % en poids, de préférence 95 à 5 % en poids du composé (II).

3. Procédé selon la revendication 1, **caractérisé en ce que** 10 à 50 % en poids du composé (I) réagissent avec 90 à 50 % en poids du composé (II).

4. Procédé selon l'une quelconque des revendications 1 à 3, **caractérisé en ce que** Hal signifie un Br.

5. Procédé selon l'une quelconque des revendications 1 à 4, **caractérisé en ce que** dans le composé (I), x = 0 et **en ce qu'**indépendamment de cela, dans le composé (II), x' = 0.

6. Procédé selon l'une quelconque des revendications 1 à 5, **caractérisé en ce que** la réaction a lieu dans un solvant organique.

7. Procédé selon l'une quelconque des revendications 1 à 6, **caractérisé en ce que** la réaction est catalysée par acide.
